(19) Europäisches Patentamt / European Patent Office / Office européen des brevets

(11) **EP 2 535 751 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(51) Int Cl.:
*G02B 9/34* *(2006.01)*      *G02B 13/00* *(2006.01)*
*G03B 9/06* *(2006.01)*      *G03B 11/00* *(2006.01)*

(21) Anmeldenummer: **11194823.8**

(22) Anmeldetag: **21.12.2011**

(54) **Kamera-Objektiv**

Camera lens

Objectif de caméra

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.06.2011 DE 102011051120**

(43) Veröffentlichungstag der Anmeldung:
**19.12.2012 Patentblatt 2012/51**

(73) Patentinhaber: **Jos. Schneider Optische Werke GmbH**
**55543 Bad Kreuznach (DE)**

(72) Erfinder:
• **Schauss, Udo**
**55596 Waldböckelheim (DE)**

• **Linn, Ralf**
**67822 Niedermoschel (DE)**

(74) Vertreter: **Schneider, Peter Christian**
**Fiedler, Ostermann & Schneider**
**Patentanwälte**
**Obere Karspüle 41**
**37073 Göttingen (DE)**

(56) Entgegenhaltungen:
**EP-A2- 1 975 665**    **AT-B- 99 600**
**AT-B- 343 935**    **DE-A1- 2 240 631**
**DE-A1- 10 015 245**    **US-A1- 2009 052 061**

**Beschreibung**

Gebiet der Erfindung

Aus aerodynamischen Gründen wird daran gearbeitet, die Außenspiegel von Autos durch Kameras zu ersetzen, die einen entsprechenden Bereich überblicken. Zu diesem Zwecke werden kompakte und robuste Kameras benötigt. Diese müssen neben geringen Baumaßen auch den teilweise extremen Anforderungen im Automobil-Bereich standhalten können, sei es hinsichtlich Erschütterungen, Temperaturschwankungen, Kratzfestigkeit, usw..

Stand der Technik

Vorschläge für kompakte Objektive gibt es viele (siehe z. B.15 US 7, 826, 151 B2, US 7,710,665 B2, US 7,054,076 B2, US 7,050,245 B2, US 6,023,375 A oder US 5,636,067 A). Einige davon nutzen jedoch extreme Asphären oder Freiformlinsen, um die jeweils gewünschte Abbildungsqualität trotz geringer Baumasse erreichen zu können. Sie erfüllen damit in der Regel nicht die gewünschten Bedingungen, u. a. auch nicht hinsichtlich der Herstellungskosten.
Weiter ist aus der EP 1 975 665 A2 ein Objektiv bekannt, das weiter unten im direkten Vergleich mit dem hier erfindungsgemäßen Objektiv diskutiert werden soll.

Aufgabe

Aufgabe der Erfindung ist es, ein Kamera-Objektiv für die Verwendung im Automobil-Bereich anzugeben, das bei sehr kompakter Bauweise eine hohe Abbildungsqualität sichert.

Lösung

Diese Aufgabe wird durch die Erfindung mit den Merkmalen des unabhängigen Anspruchs gelöst. Vorteilhafte Weiterbildungen der Erfindung sind in den Unteransprüchen gekennzeichnet. Der Wortlaut sämtlicher Ansprüche wird hiermit durch Bezugnahme zum Inhalt dieser Beschreibung gemacht.
Die Erfindung betrifft Kamera-Objektiv zum Abbilden eines Objektes, welches in der angegebenen Reihenfolge, von der Objektseite aus beginnend, folgende Linsen aufweist:

a) eine erste positive Meniskus-Linse,

a1) wobei die konkave Oberfläche der ersten positiven Meniskus-Linse von der Objektseite abgewandt ist;

b) eine zweite negative Linse,

b1) wobei die objektseitige Oberfläche der zweiten negativen Linse konkav ist; und

b2) wobei der Wert des Krümmungsradius der objektseitigen Oberfläche der zweiten negativen Linse betragsmäßig geringer ist als der betragsmäßige Wert des Krümmungsradius der bildseitigen Oberfläche dieser Linse;

c) eine dritte positive Linse,

c1) wobei die bildseitige Oberfläche der dritten positiven Linse konvex ist; und
c2) wobei der Wert des Krümmungsradius der objektseitigen Oberfläche der dritten positiven Linse betragsmäßig größer ist als der betragsmäßige Wert des Krümmungsradius der bildseitigen Oberfläche dieser Linse;

d) eine vierte Bikonvex-Linse;
e) eine fünfte negative Linse,

e1) wobei der Wert des Krümmungsradius der objektseitigen Oberfläche der fünften negativen Linse betragsmäßig kleiner ist als der betragsmäßige Wert des Krümmungsradius der bildseitigen Oberfläche dieser Linse;

f) wobei die vierte Bikonvex-Linse und die fünfte negative Linse miteinander verkittet sind und eine Dublette bilden,
g) wobei das Kamera-Objektiv keine weiteren Linsen aufweist und
h) wobei die objektseitige Oberfläche der dritten positiven Linse und die bildseitige Oberfläche der fünften negativen Linse als asphärische Oberflächen ausgebildet sind.

Die erstgenannte Asphärisierung bewirkt insbesondere eine Korrektur des Öffnungsfehlers des Objektivs. Die zweitgenannte Asphärisierung verringert die Bildfeldwölbung,

Das oben bereits erwähnte, aus der EP 1 975 665 A2 bekannte Objektiv unterscheidet sich außer in besagten Asphärisierungen auch dadurch von dem erlindungsgeniäßen objektiv, dass statt der vierten Bikonvex- und der fünften negativen Linse ein aus einer Bikonvex- und einer negativen Meniskuslinse zusammengesetztes Kittglied und eine Bikonkavlinse Einsatz finden. Mithin wird eine zusätzliche Linse, nämlich besagte Bikonkavlinse, betätigt. Insbesondere wird ihr die Aufgabe einer Korrektion der Bildfeldwölbung zugewiesen - ein Aufgabe, die erfindungsgemäß durch die oben zweitgenannte Asphärisierung erfüllt wird, sodass besagte Bikonkavlinse unter Gewichts- und Kostenreduktion eingespart werden kann.

Die zweite und dritte Linse sind in vielen Ausführungsformen dieses Objektivtyps Meniskuslinsen. In anderen Ausführungsformen sind es allerdings Bikonkav- bzw. Bikonvex-Linsen.

Die fünfte negative Linse kann sowohl als Meniskuslinse mit einer bildseitigen konvexen Oberfläche als auch als Bi-Konkav-Linse ausgebildet sein. Die am stärksten wirkende optische Fläche des Objektivs ist die konkave, objektseitige Oberfläche der zweiten Linse, welche die stärkste Krümmung aufweist und somit durch ihren stark brechenden Effekt den stärksten Einfluss auf die Gesamtperformance des Objektivs hat.

Objektseitig vor der ersten Linse kann ein Schutzglas mit einer MRC-Beschichtung (MRC - "Multi resistent coating") angeordnet sein, um das Objektiv gegen Witterungseinflüsse, Steinschlag, etc. zu schützen.

Das vorgeschlagenen Objektiv zeichnet sich insbesondere dadurch aus, dass trotz weniger Linsen und damit einem sehr kompakten Design eine hohe Öffnung und somit eine hohe Beleuchtungsstärke möglich sind. Eine Öffnung bis 1,2 ist mit dem vorgeschlagenen Objektiv realisierbar.

Selbst bei dieser Öffnung hat das vorgeschlagene Objektiv hervorragende Abbildungseigenschaften. Die Feldkrümmung liegt für fast alle Wellenlängen sowohl sagittal als auch tangential unter 0,2 mm am Bildfeldrand. Der Farblängsfehler liegt in der Bildmitte bei 0,03 mm über die Breite des gesamten sichtbaren Spektrums.

Verringert man die Öffnung des Objektivs auf 1,4, so kann die Feldkrümmung für alle Farben und sowohl sagittal als auch tangential auf weniger als 0,12 mm am Bildfeldrand gedrückt werden.

Durch das sehr kompakte Design und seine Robustheit ist das Objektiv beispielsweise sehr gut für die Verwendung als Außenspiegelersatz bei Kraftfahrzeugen geeignet.

Um Bildfehler insgesamt möglichst klein zu halten, ist es wünschenswert, die Krümmungen der Linsen-Oberflächen möglichst flach zu halten. Daher bestehen alle Linsen des Objektivs aus hochbrechenden Gläsern. Dazu hat das arithmetische Mittel aus den Brechungsindizes aller Linsen des Kamera-Objektivs einen Wert größer 1,8. Der Brechungsindex hierbei wird jeweils für eine Wellenlänge von 587,56 nm bestimmt.

Vorzugsweise wird zwischen der zweiten negativen Linse und der dritten positiven Linse eine Blende angeordnet. Die im vorgeschlagenen Objektiv gewählte Position der Blende zwischen der zweiten negativen Linse und dritten positiven Linse ist besonders günstig für eine weitestgehend homogene Ausleuchtung des Bildfeldes.

Die Blende ist zweckmäßigerweise eine Iris-Blende mit einer Mehrzahl von Lamellen. Die Lamellen sind dabei - wie üblich - aus einem lichtundurchlässigen Material gebildet.

Eine der Lamellen weist eine Aussparung im lichtundurchlässigen Material auf und fungiert als Schließlamelle. Die Aussparung ist durch einen Neutraldichtefilter überdeckt.

Die Führung der Schließlamelle ist derart ausgebildet, dass die Schließlamelle diejenige Öffnung vollständig überdecken kann, die beim Abblenden mittels der anderen Lamellen verbleibt.

Vorteilhafter Weise ist die Form und Lage der Aussparung derart gewählt, dass bei Überdecken der beim Abblenden verbleibenden Blendenöffnung durch die Schließlamelle der Neutraldichtefilter in die verbleibende Blendenöffnung eingeschwenkt wird, d. h. die verbleibende Blendenöffnung überdeckt.

Als lichtundurchlässiges Material für die Fertigung der Lammellen wird i. d. R. Stahlblech verwendet, welches mit schwarzem Gleitlack beschichtet ist.

Die Schließlamelle muss bei dem gewählten Blendenaufbau als oberste oder als unterste Lamelle angeordnet sein, da ansonsten der aufgesetzte Neutraldichtefilter mit den anderen Lamellen räumlich in Konflikt geraten könnte.

Der Aufbau der Blende kann derart gewählt werden, dass die beiden äußersten Lamellen der Blende als Schließlamellen mit einer durch einen Neutraldichtefilter überdeckten Aussparung ausgebildet sind.

Die körperliche Wirkung der Lamellen der Irisblende erzeugt z. B. einen Blendenwert zwischen 1,2 und 13,5. Der weiterhin vorhandene Neutraldichtefilter kann aus einem Folien-Material bestehen, welches beispielsweise auf die Schließlamelle aufgeklebt wird (z. B. mittels Sekundenkleber). Durch das zusätzliche Einschwenken des Neutraldichtefilters mit einer optischen Dichte z. B. zwischen 2 und 6 kann ein Gesamtblendenwert des Objektivs von 360 und mehr erreicht werden. Die Blende ist typischerweise symmetrisch gestaltet, motorisch betrieben und durch die Kamera gesteuert.

Da die Baumaße des Kamera-Objektivs die folgenden Bedingungen erfüllen können:

Höhe kleiner oder gleich 34,0 mm;

Breite kleiner oder gleich 34,0 mm; und
Länge kleiner oder gleich 41,0 mm,

kann das Objektiv auf sehr engem Raum eingesetzt werden.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Dabei sind die Linsenkombinationen von zwei Objektiven bzw. Linsenkombinationen dieser zwei Objektive schematisch dargestellt. Im Einzelnen zeigt:

Fig. 1      eine schematische Darstellung der Linsenanordnung eines 1,2 / 10 mm-Kamera-Objektivs;
Fig. 2      die relative Beleuchtungsstärke des 10 mm-Kamera-Objektivs gemäß Fig. 1;
Fig. 3      eine schematische Darstellung der Linsenanordnung eines 1,4 / 14 mm-Kamera-Objektivs;
Fig. 4      die relative Beleuchtungsstärke des 14 mm-Kamera-Objektivs gemäß Fig. 3;
Fig. 5      eine Explosions-Darstellung (schematisch) der Blende mit ND-Filter;
Fig. 6A    die schematische Ansicht einer Blenden-Lamelle;
Fig. 6B    die schematische Ansicht einer Blenden-Lamelle mit ND-Filter (Schließlamelle);
Fig. 7A    eine Draufsicht (schematisch) der Blende (von der Objektseite aus betrachtet);
Fig. 7B    eine Schnittansicht (Längsschnitt; schematisch) der Blende; und
Fig. 8      eine Ansicht der Blende ohne Flansch und Lagerring als Draufsicht von der Objektseite auf die Ebene der Kurvenscheibe.

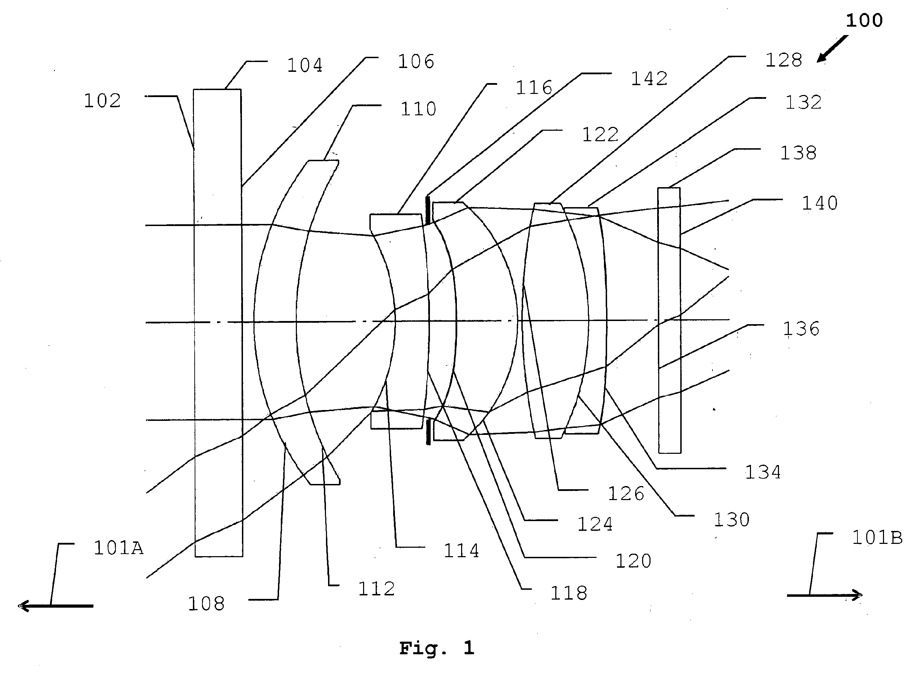

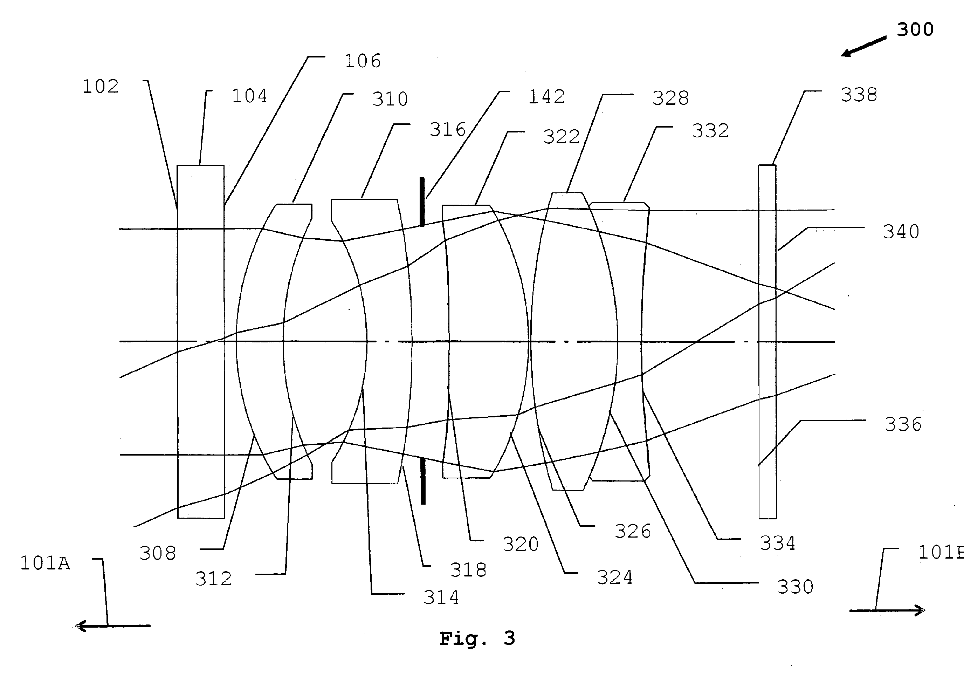

Die technischen Daten der Linsenkombinationen der zwei Kamera-Objektive gemäß den Linsenanordnungen der Figuren 1 und 3 sind in den Tabellen 1 bis 2A aufgelistet. Im Einzelnen zeigt:

Tab. 1      eine Liste der Radien, der Dicken bzw. Luftabstände, der Brechzahlen und der Abbe-Zahlen der Linsenkombination des 10 mm-Kamera-Objektivs gemäß Fig. 1;
Tab. 1A    eine Liste der Asphärendaten des 10 mm-Kamera-Objektivs gemäß Fig. 1;
Tab. 2      eine Liste der Radien, der Dicken bzw. Luftabstände, der Brechzahlen und der Abbe-Zahlen der Linsenkombination des 14 mm-Kamera-Objektivs gemäß Fig. 3; und
Tab. 2A    eine Liste der Asphärendaten des 14 mm-Kamera-Objektivs gemäß Fig. 3.

In den zwei Ausführungsbeispielen gemäß den schematischen Darstellungen der Fig. 1 und 3 weist das vorgeschlagene Kamera-Objektiv 100, 300, in der Reihenfolge von der Objektseite 101A aus betrachtet, jeweils ein Schutzglas 104 mit einer sogenannten MRC-Beschichtung (MRC - "Multi resistent coating") auf. Dahinter sind fünf Linsen angeordnet:

a) eine erste positive Meniskus-Linse 110, 310,

a1) wobei die konkave Oberfläche 112, 312 der ersten positiven Meniskus-Linse 110, 310 von der Objektseite abgewandt ist;

b) eine zweite negative Meniskus-Linse 116, 316,

b1) wobei die objektseitige Oberfläche 114, 314 der zweiten negativen Linse 116, 316 konkav ist; und
b2) wobei der Wert des Krümmungsradius der objektseitigen Oberfläche 114, 314 der zweiten negativen Linse 116, 316 betragsmäßig geringer ist als der betragsmäßige Wert des Krümmungsradius der bildseitigen Oberfläche 118, 318 dieser Linse;

c) eine dritte positive Meniskus-Linse 122, 322,

c1) wobei die bildseitige Oberfläche 120, 320 der dritten positiven Linse 122, 322 konvex ist; und
c2) wobei der Wert des Krümmungsradius der objektseitigen Oberfläche 120, 320 der dritten positiven Linse 122, 322 betragsmäßig größer ist als der betragsmäßige Wert des Krümmungsradius der bildseitigen Oberfläche 124, 324 dieser Linse;

d) eine vierte Bikonvex-Linse 128, 328;

e) eine fünfte negative Linse 132, 332,

e1) wobei der Wert des Krümmungsradius der objektseitigen Oberfläche 130, 330 der fünften negativen Linse 132, 332 betragsmäßig kleiner ist als der betragsmäßige Wert des Krümmungsradius der bildseitigen Oberfläche 130, 330 dieser Linse;

Zur Aufnahme des Bildes wird üblicherweise ein CCD-Sensor verwendet. Hinter der fünften Linse folgen daher eine Reihe von Deckgläsern 138, 338 des CCD-Sensors. Dies lassen sich typischerweise durch einen Glasweg von 0,75 mm simulieren.

Die vierte Bikonvex-Linse 128, 328 und die fünfte negative Linse 132, 332 sind jeweils miteinander verkittet und bilden eine Dublette.

Die fünfte negative Linse 132 des Objektivs 100 des Ausführungsbeispiels gem. Fig. 1 und die fünfte negative Linse 332 des Objektivs 300 des Ausführungsbeispiels gem. Fig. 3 unterscheiden sich in der Linsenform.

Die fünfte negative Linse 132 des Objektivs 100 ist eine negative Meniskuslinse mit einer objektseitigen konkaven Oberfläche 130, während die fünfte negative Linse 332 des Objektivs 300 eine Bikonkav-Linse ist. Die bildseitigen Oberflächen 134, 334 der jeweiligen fünften negativen Linse 132, 332 beider Objektive 100, 300 sind asphärisch ausgebildet.

Ebenso sind bei beiden Objektiven 100, 300 die objektseitigen Oberflächen 120, 320 asphärisch gestaltet.

In den Tabellen 1 und 2 sind die Radien, die Dicken bzw. Luftabstände, die Brechzahlen und die Abbe-Zahlen der zwei Ausführungsbeispiele des vorgeschlagenen Kamera-Objektivs gemäß den Figuren 1 und 3 aufgelistet.

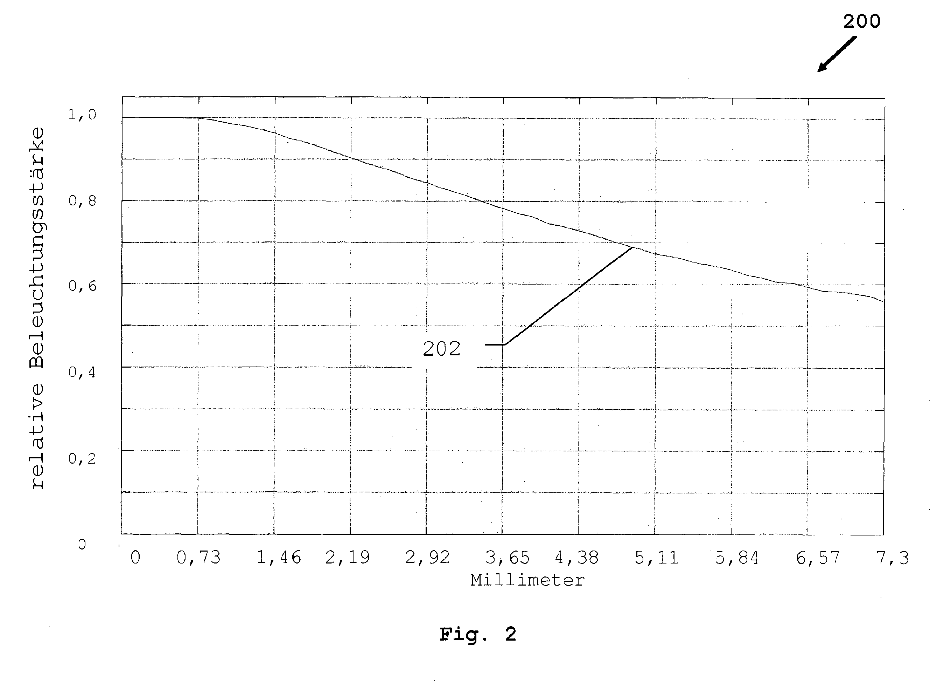

Dazu finden sich in Tabelle 1A die Asphärendaten der asphärischen Oberflächen 120 und 134 gemäß Fig. 1 und in Tabelle 2A die Asphärendaten der asphärischen Oberflächen 320 und 334 gemäß Fig. 2.

Zum Verständnis der in den Tabellen 1A und 2A verwendeten Koeffizienten sei folgendes erwähnt: Die Oberfläche einer asphärischen Linse kann allgemein mit der folgenden Formel beschrieben werden:

$$z = \frac{Cy^2}{1 + \sqrt{1 - (1+K) \cdot C^2 y^2}} + B_4 y^4 + B_6 y^6 + B_8 y^8 + B_{10} y^{10} + B_{12} y^{12}$$

wobei

- z die Pfeilhöhe (in mm) in Bezug auf die achsensenkrechte Ebene angibt, also die Richtung der Abweichung von der Ebene senkrecht zur optischen Achse, d. h. in Richtung der optischen Achse;
- C die sogenannte Scheitelkrümmung angibt. Sie dient zur Beschreibung der Krümmung einer konvexen oder konkaven Linsenoberfläche und errechnet sich aus dem Kehrwert des Radius;
- y den Abstand von der optischen Achse (in mm) angibt. y ist eine Radialkoordinate;
- K die sogenannte Konuskonstante angibt;
- $B_4$, $B_6$, $B_8$, $B_{10}$, $B_{12}$ die sogenannten Asphärenkoeffizienten darstellen, die die Koeffizienten einer Polynomentwicklung der Funktion zur Beschreibung der Oberfläche der Asphäre sind.

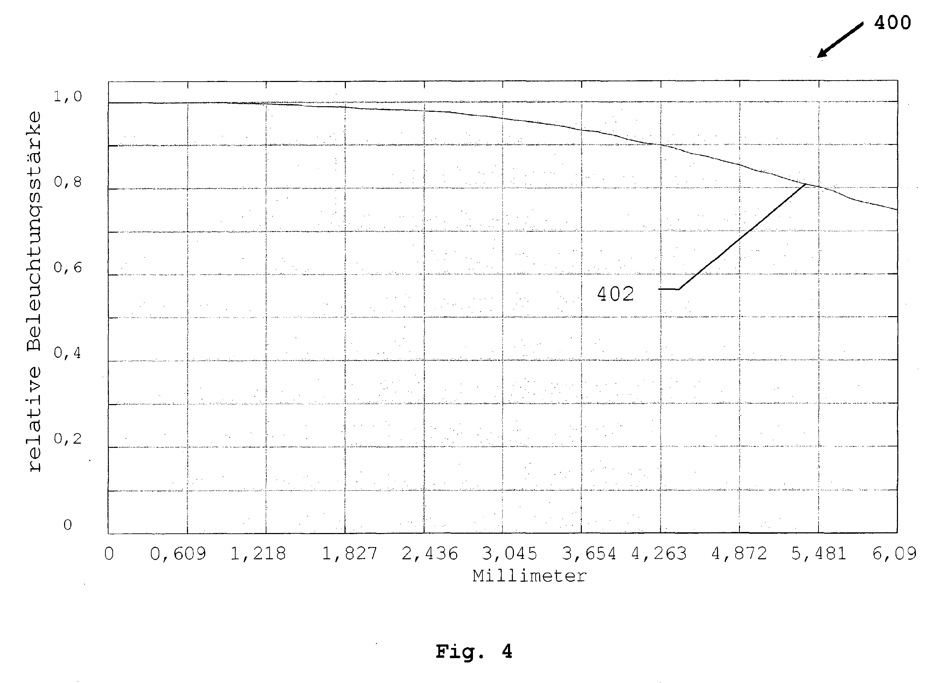

In den Figuren 2 und 4 sind als charakteristische Kenngrößen der beiden Objektive 100, 300 gemäß den Figuren 1 und 3 beispielsweise die Verlaufsgrafiken 200, 400 der relativen Beleuchtungsstärke graphisch dargestellt.

Fig. 2 zeigt die Verlaufskurve 202 der relativen Beleuchtungstärke des Bildes verglichen mit dem Zentrum für das 10 mm-Kamera-Objektiv gemäß Fig. 1. Die x-Achse gibt die Entfernung vom Zentrum des Bildes bei einer Blendenzahl von 1,2 an.

Analog zeigt die Fig. 4 die Verlaufskurve 402 der relativen Beleuchtungsstärke des Bildes verglichen mit dem Zentrum für das 14 mm-Kamera-Objektiv gemäß Fig. 3. Die x-Achse gibt die Entfernung vom Zentrum des Bildes bei einer Blendenzahl von 1,4 an.

Beide Verlaufskurven machen deutlich, dass der Helligkeitsabfall vom Zentrum zum Bildrand hin gering ist, was die gute Abbildungsqualität hinsichtlich dieser charakteristischen Kenngröße der Objektive unterstreicht.

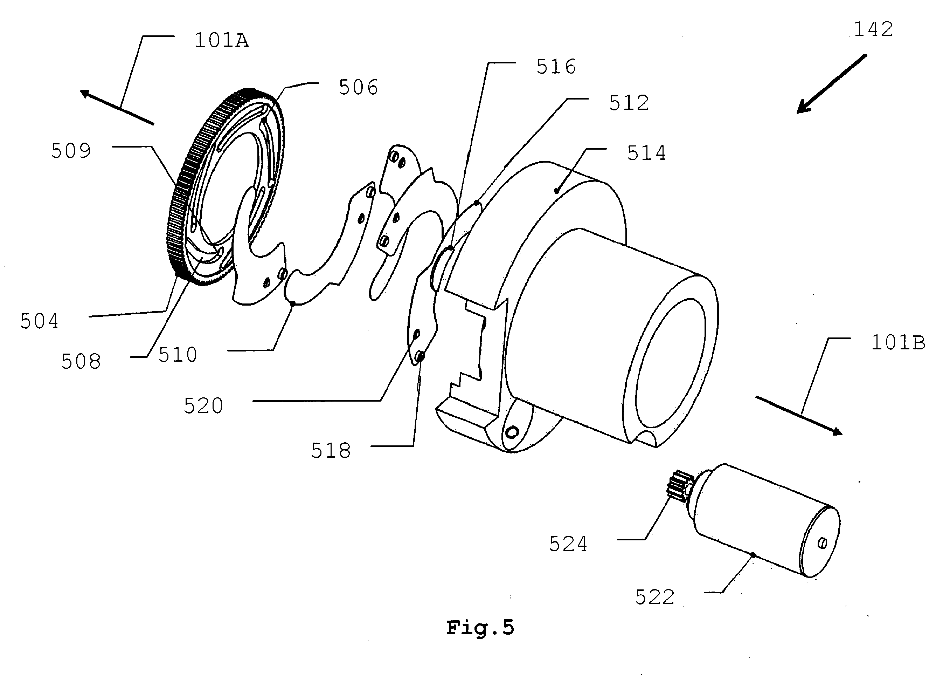

Die in Fig. 5 gezeigte Explosions-Darstellung zeigt ein bevorzugtes Ausführungsbeispiel der Blende 142. Die Blende 142 weist, von der Objektseite 101A aus betrachtet, zunächst eine Kurvenscheibe 504 mit vier Steuerkurven 506 auf, sowie eine Steuerkurve 508. Die Steuerkurven 506, 508 sind speziell geformte Aussparungen (Schlitze) in der Kurvenscheibe 504.

In Richtung der Bildseite 101B folgen hinter der Kurvenscheibe 504, entlang der optischen Achse des Objektivs 100, weiterhin vier Blenden-Lamellen 510 sowie die Schließlamelle 512. Letztere liegt direkt auf dem Blendenboden, während die übrigen unverschränkt darüber angeordnet sind. Die Schließlamelle 512 weist eine Aussparung 516 auf, die mit einem Neutraldichtefilter (ND-Filter) überdeckt ist, der aus einer ND-Folie besteht, die auf die Lamelle 512 über die Aussparung 516 geklebt ist.

Nach der Schließlamelle 512 folgt der Blendenboden 514, der gleichzeitig auf der rückwärtigen Seite als Linsenauflage dient.

An allen Blenden-Lamellen 510, 512 sind je zwei Blendenniete angenietet, in Richtung des Blendenbodens 514 der sogenannte Lagerniet 518 und gegenüber, zur Kurvenscheibe 504 hin, der Führungsniet 520.

Für die Realisierung der unterschiedlichen Blendenöffnungen mittels der Blenden-Lamellen 510, 512 ist am Blendenboden 514 ein Schrittmotor 522 mit einem Antriebszahnrad 524 für die Kurvenscheibe 504 angeordnet.

Die Steuerkurven 506, 508, die in die Kurvenscheibe 504 eingebracht sind, dienen als Führungen für die Führungsniete 520, die an den Lamellen 510, 512 angebracht sind.

Die vier Steuerkurven 506 sind gleichartig geformt, während die Form der Steuerkurve 508 eine von den übrigen Steuerkurven unterschiedliche Form aufweist und speziell der Führung des Führungsniets 520 der Schließlamelle 512 dient. Damit die Schließlamelle 512 die nach Abblenden der vier Lamellen 510 verbleibende Blendenöffnung vollständig mit dem ND-Filter überdecken kann, weist die Steuerkurve 508 für die Schließlamelle 512 in ihrem letzten Abschnitt einen Knick 509 auf, der die Schließlamelle über die Mitte der Blende schwenken kann.

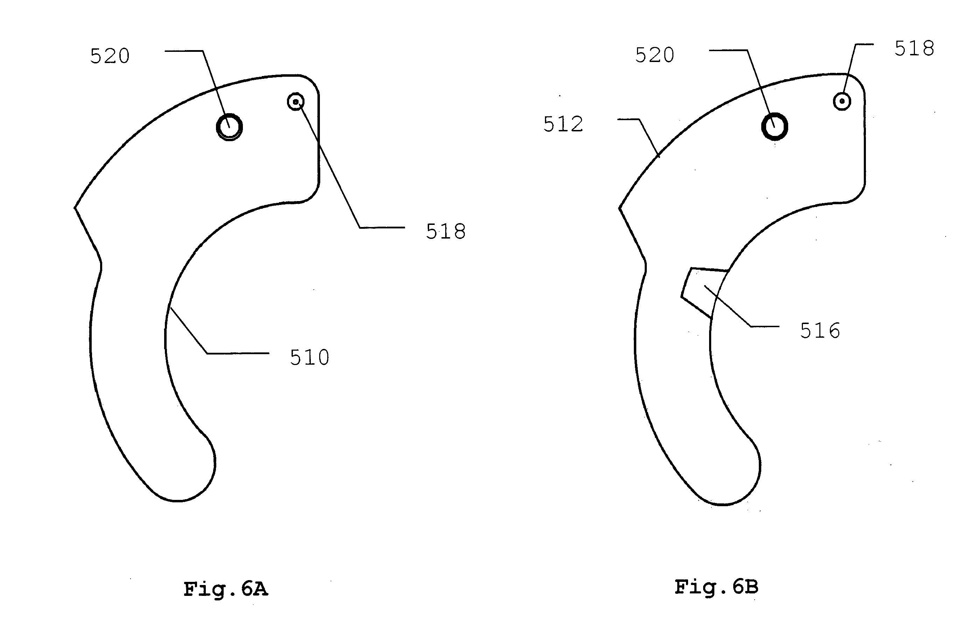

In Fig. 6A ist eine der vier Blenden-Lamellen 510 dargestellt und in Fig. 6B die Schließlamelle 512.

Der Lagerniet 518 aller Lamellen ist jeweils fixer Drehpunkt der Lamellen 510, 512. Die auf der Gegenseite der Lamellen 510, 512 angeordneten Führungsniete 520 sind so angeordnet, dass sie in die Öffnungen der Steuerkurven (Führungen) 506, 508 hinein ragen und so die Führung der Blendenlamellen 510, 512 zum Einschwenken in Richtung der optischen Achse des Objektivs 100 realisieren.

Die in Fig. 6B gezeigte Schließlamelle 512 weist, im Unterschied zu den übrigen Lamellen 510, zusätzlich die Aussparung 516 auf, die durch den Neutraldichtefilter überdeckt ist.

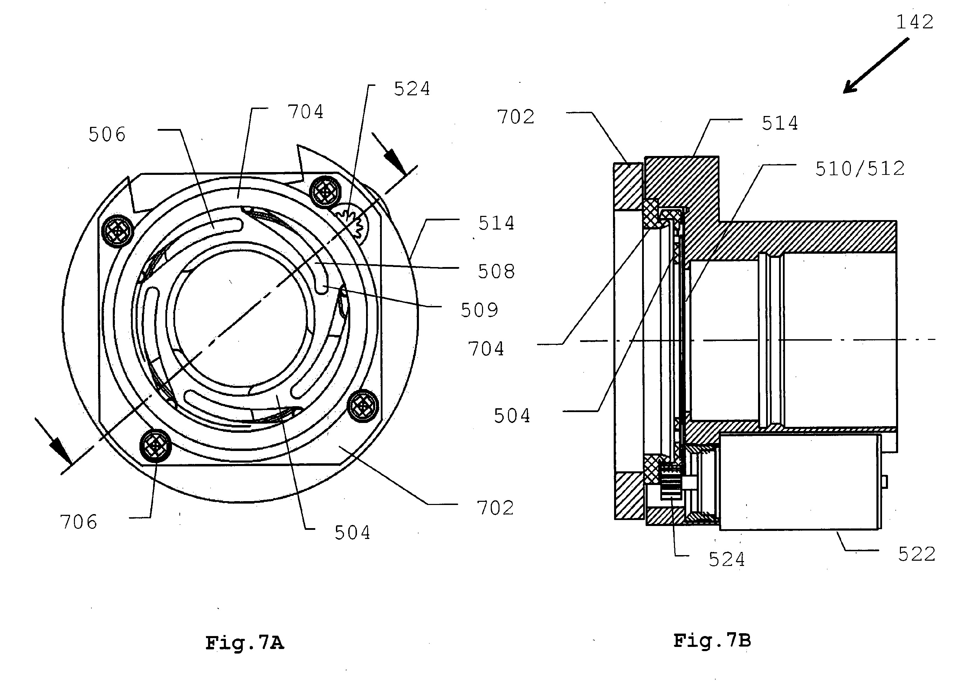

Die Ansichten der Fig. 7A (Draufsicht) und Fig. 7B (Längsschnitt) der Blende 142 zeigen die in der Explosionsdarstellung der Fig. 5 genannten Elemente in montiertem, funktionsfähigem Zustand.

Dabei sind, ergänzend zu bereits in Fig. 5 dargestellten Elementen, an der Blende (aus bildseitiger Richtung 101A) betrachtet) noch ein Flansch 702 und ein Lagerring 704 vorgesetzt. Der Lagerring 704 ermöglicht eine geführte Drehbewegung der Kurvenscheibe 504, während der Flansch 702, der mittels der Befestigungsschrauben 706 auf die Blende aufgesetzt ist, als Gegenstück zum Blendenboden 514 die Blendenelemente zusammenhält.

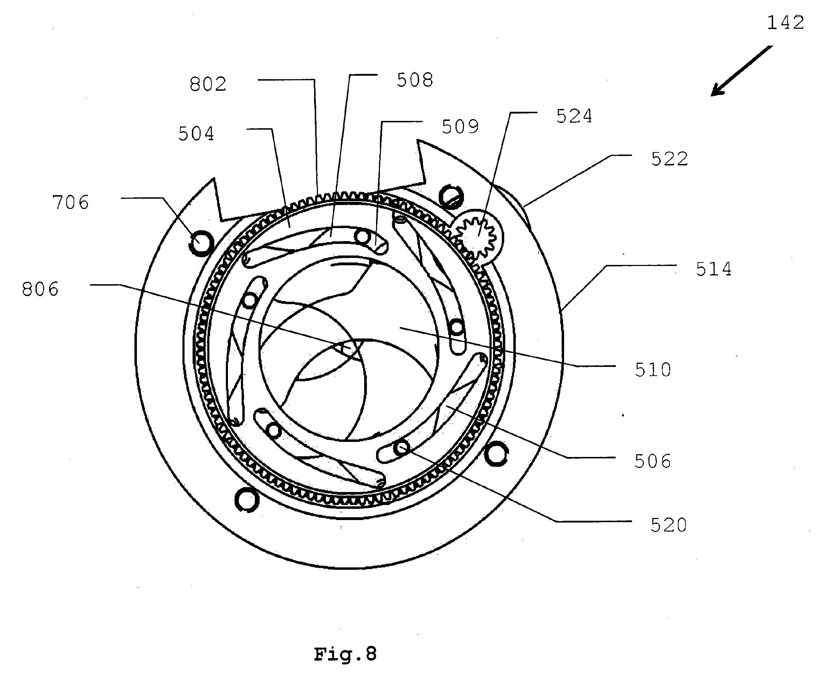

Eine weitere Ansicht der Blende 124 ohne Flansch 702 und Lagerring 704 als Draufsicht von der Objektseite auf die Ebene der Kurvenscheibe 504 zeigt Fig. 8. Deutlich ist hier der Zahnkranz 802 der Kurvenscheibe 504 zu erkennen.

Die Kurvenscheibe 504 wird durch das Antriebszahnrad 524 des Schrittmotors 522 angetrieben, wobei die Zähne des Antriebszahnrades 524 in die Zähne des Zahnkranzes 802 der Kurvenscheibe 504 eingreifen. Dabei werden die Führungsniete 520 der Lamellen 510, 512 innerhalb der Steuerkurven 506, 508 der Kurvenscheibe 504 bewegt. Mittels dieser Bewegung wird ein Drehen der Lamellen 510, 512 um ihre fixen Drehachsen 518 (Lagerniete) bewirkt. Dabei verändert sich die Lage der Lamellen 510, 512 zueinander, wodurch ein Vergrößern bzw. Verkleinern der Blendenöffnung 806 erreicht wird.

Die Form der Steuerkurve 508 der Kurvenscheibe 504 weicht von der Form der Steuerkurven 506 ab. Die Steuerkurve 508 dient speziell der Führung des Führungsniets 520 der Schließlamelle 512 mit dem ND-Filter. Die besondere Form der Steuerkurve 508 ist derart gewählt, dass die nach der Lageänderung der Lamellen 510 verbliebene Blendenöffnung 806 vollständig durch die Schließlamelle 512 überdeckt wird. Durch die Aussparung 516 in der Schließlamelle, die mit dem ND-Filter überdeckt ist, wird erreicht, dass insgesamt eine verbleibende fünfeckige Blendenöffnung entsteht, deren Kanten durch die lichtundurchlässigen Bereiche aller fünf Lamellen 510, 512 gebildet werden, wobei jedoch die verbleibende Blendenöffnung durch den ND-Filter der Schließlamelle 512 überdeckt wird.

Es sind zahlreiche Abwandlungen und Weiterbildungen der beschriebenen Ausführungsbeispiele verwirklichbar. So können beispielsweise zahlreiche Objektive mit diversen Brennweiten des hier beschriebenen Objektivtyps realisiert werden. Es sind für andere als die bereits genannten Brennweiten bzw. Blendenzahlen alle dazu gehörigen Maßangaben, z. B. Radien und Luftabstände, grundsätzlich skalierbar. Dies ermöglicht die Realisierung nicht nur der zwei beschriebenen Beispiele, sondern einer ganze Serie von Objektiven gleicher Art, aber mit unterschiedlichen Brennweiten. Das Objektiv ist damit für unterschiedliche Anwendungen einsetzbar.

Tab. 1

| Brennweite 10 mm / Blende k = 1,2 | | | | |
|---|---|---|---|---|
| Bezugs_zeichen | Radius [mm] | Dicken bzw. Luftabstände [mm] | Brechzahl $n_d$ | Abbe-Zahl $V_d$ |
| 102 | UNENDLICH | | | |
| 104 | | 2,000 | 1,517 | 64, 14 |

(fortgesetzt)

| Brennweite 10 mm / Blende k = 1,2 | | | | |
|---|---|---|---|---|
| Bezugs_zeichen | Radius [mm] | Dicken bzw. Luftabstände [mm] | Brechzahl $n_d$ | Abbe-Zahl $V_d$ |
| 106 | UNENDLICH | | | |
| | | 0,500 | 1,000 | 0,00 |
| 108 | 10,426 | | | |
| 110 | | 1,760 | 1,847 | 23,77 |
| 112 | 12,229 | | | |
| | | 4,140 | 1,000 | 0,00 |
| 114 | -7,179 | | | |
| 116 | | 1,440 | 1,805 | 25,35 |
| 118 | -28,761 | | | |
| | | 1,160 | 1,000 | 0,00 |
| *120 | -14,613 | | | |
| 122 | | 2,540 | 1,835 | 42,71 |
| 124 | -6,203 | | | |
| | | 0,200 | 1,000 | 0,00 |
| 126 | 21,472 | | | |
| 128 | | 2,750 | 1,881 | 40,99 |
| 130 | -10,368 | | | |
| 132 | | 0,760 | 1,923 | 18,89 |
| *134 | -59,333 | | | |
| | | 2, 170 | 1,000 | 0,00 |
| 136 | UNENDLICH | | | |
| 138 | | 0,900 | 1,517 | 64,14 |
| 140 | UNENDLICH | | | |
| * = asphärische Oberfläche | | | | |

Tab. 1A

| Bezugsziffer | Asphärendaten | |
|---|---|---|
| 120 | C | -0,068432 |
| | K | 0 |
| | $B_4$ | $-0,133052*10^{-2}$ |
| | $B_6$ | $-0,839589*10^{-7}$ |
| | $B_8$ | $-0,433630*10^{-6}$ |
| | $B_{10}$ | 0 |
| | $B_{12}$ | 0 |

(fortgesetzt)

| Bezugsziffer | Asphärendaten | |
|---|---|---|
| 134 | C | -0,016854 |
| | K | 0 |
| | $B_4$ | $-0,55884*10^{-3}$ |
| | $B_6$ | $0,493090*10^{-5}$ |
| | $B_8$ | $0, 123082*10^{-8}$ |
| | $B_{10}$ | 0 |
| | $B_{12}$ | 0 |

Tab. 2

| Brennweite 14 mm / Blende k = 1,4 | | | | |
|---|---|---|---|---|
| Bezugs_zeichen | Radius [mm] | Dicken bzw. Luftabstände [mm] | Brechzahl $n_d$ | Abbe-Zahl $V_d$ |
| 102 | UNENDLICH | | | |
| 104 | | 2,000 | 1,517 | 64, 14 |
| 106 | UNENDLICH | | | |
| | | 0,500 | 1,000 | 0,00 |
| 308 | 10,337 | | | |
| 310 | | 2,000 | 1,847 | 23,77 |
| 312 | 11,160 | | | |
| | | 3,580 | 1,000 | 0,00 |
| 314 | -9,010 | | | |
| 316 | | 1,950 | 1,808 | 22,75 |
| 318 | -27,470 | | | |
| | | 1,570 | 1,000 | 0,00 |
| *320 | -110,540 | | | |
| 322 | | 3,400 | 1,864 | 40,57 |
| 324 | -10,555 | | | |
| | | 0,100 | 1,000 | 0,00 |
| 326 | 20,822 | | | |
| 328 | | 3,710 | 1,883 | 40,75 |
| 330 | -13,490 | | | |
| 332 | | 1,010 | 1,808 | 22,75 |
| *334 | 31, 832 | | | |
| | | 5,000 | 1,000 | 0,00 |
| 336 | UNENDLICH | | | |
| 338 | | 0,750 | 1,517 | 64, 14 |
| 340 | UNENDLICH | | | |
| * = asphärische Oberfläche | | | | |

Tab. 2A

| Bezugsziffer | Asphärendaten | |
|---|---|---|
| 320 | C | -0,009047 |
| | K | 0 |
| | $B_4$ | $-0,257407*10^{-3}$ |
| | $B_6$ | $-0,253065*10^{-6}$ |
| | $B_8$ | $0,288144*10^{-7}$ |
| | Bio | $-0,340000*10^{-9}$ |
| | $B_{12}$ | 0 |
| 334 | C | 0,031415 |
| | K | 0 |
| | $B_4$ | $-0,143897*10^{-3}$ |
| | $B_6$ | $-0,691042*10^{-6}$ |
| | $B_8$ | $0,997740*10^{-8}$ |
| | $B_{10}$ | 0 |
| | $B_{12}$ | 0 |

Bezugszeichen

| | |
|---|---|
| 100 | Kamera-Objektiv |
| 101A | Objektseite des Objektivs |
| 101B | Bildseite des Objektivs |
| 102 | erste Oberfläche des Schutzglases 104 |
| 104 | Schutzglas |
| 106 | zweite Oberfläche des Schutzglases 104 |
| 108 | erste Oberfläche der Linse 110 |
| 110 | erste Linse des Objektivs |
| 112 | zweite Oberfläche der Linse 110 |
| 114 | erste Oberfläche der Linse 116 |
| 116 | zweite Linse des Objektivs |
| 118 | zweite Oberfläche der Linse 116 |
| 120 | erste Oberfläche der Linse 122 |
| 122 | dritte Linse des Objektivs |
| 124 | zweite Oberfläche der Linse 122 |
| 126 | erste Oberfläche der Linse 128 |
| 128 | vierte Linse des Objektivs |
| 130 | zweite Oberfläche der Linse 128 / erste Oberfläche der Linse 132 |
| 132 | fünfte Linse des Objektivs |
| 134 | zweite Oberfläche der Linse 132 |
| 136 | erste Oberfläche der transparenten Platte 138 |
| 138 | transparenten Platte |
| 140 | zweite Oberfläche der transparenten Platte 138 |
| 142 | Blende |
| 200 | Grafik des Verlaufs der relativen Beleuchtungsstärke |
| 202 | Verlaufskurve der relativen Beleuchtungsstärke des 10 mm-Objektivs |
| 300 | Kamera-Objektiv |
| 308 | erste Oberfläche der Linse 310 |

310     erste Linse des Objektivs
312     zweite Oberfläche der Linse 310
314     erste Oberfläche der Linse 316
316     zweite Linse des Objektivs
318     zweite Oberfläche der Linse 316
320     erste Oberfläche der Linse 322
322     dritte Linse des Objektivs
324     zweite Oberfläche der Linse 322
326     erste Oberfläche der Linse 328
328     vierte Linse des Objektivs
330     zweite Oberfläche der Linse 328 / erste Oberfläche der Linse 332
332     fünfte Linse des Objektivs
334     zweite Oberfläche der Linse 332
336     erste Oberfläche der transparenten Platte 338
338     transparente Platte
340     zweite Oberfläche der transparenten Platte 338
400     Grafik des Verlaufs der relativen Beleuchtungsstärke
402     Verlaufskurve der relativen Beleuchtungsstärke des 14 mm-Objektivs
504     Kurvenscheibe
506     Steuerkurven für einfache Blenden-Lamellen
508     Steuerkurve für Schließlamelle
509     letzter Abschnitt der Steuerkurve 508
510     einfache Blenden-Lamellen
512     Schließlamelle
514     Linsenfassung / Blendenboden
516     Aussparung mit Neutral-Dichtefilter (ND-Filter)
518     Lagerniet
520     Führungsniet
522     Schrittmotor
524     Antriebs-Zahnrad für Kurvenscheibe
702     Flansch
704     Lagerring
706     Befestigungsschrauben
802     Zahnkranz der Kurvenscheibe 504
804     Bohrungen für Befestigungsschrauben
806     Blendenöffnung

zitierte Literatur

zitierte Patentliteratur

US 7,826,151 B2
US 7,710,665 B2
US 7,054,076 B2
US 7,050,245 B2
US 6,023,375 A
US 5,636,067 A
EP 1 975 665 A2

**Patentansprüche**

1.  Kamera-Objektiv (100, 300) zum Abbilden eines Objektes (100, 300), welches in der angegebenen Reihenfolge, von der Objektseite (101A) aus beginnend, folgende Linsen aufweist:

    a) eine erste positive Meniskus-Linse (110, 310),

a1) wobei die konkave Oberfläche (112, 312) der ersten positiven Meniskus-Linse (110, 310) von der Objektseite 101A) abgewandt ist;

b) eine zweite negative Linse (116, 316),

b1) wobei die objektseitige Oberfläche (114, 314) der zweiten negativen Linse (116, 316) konkav ist; und
b2) wobei der Wert des Krümmungsradius der objektseitigen Oberfläche (114, 314) der zweiten negativen Linse (116, 316) betragsmäßig geringer ist als der betragsmäßige Wert des Krümmungsradius der bildseitigen Oberfläche (118, 318) dieser Linse;

c) eine dritte positive Linse (122, 322),

c1) wobei die bildseitige Oberfläche (120, 320) der dritten positiven Linse (122, 322) konvex ist; und
c2) wobei der Wert des Krümmungsradius der objektseitigen Oberfläche (120, 320) der dritten positiven Linse (122, 322) betragsmäßig größer ist als der betragsmäßige Wert des Krümmungsradius der bildseitigen Oberfläche (124, 324) dieser Linse;

d) eine vierte Bikonvex-Linse (128, 328);
e) eine fünfte negative Linse (132, 332),

e1) wobei der Wert des Krümmungsradius der objektseitigen Oberfläche (130, 330) der fünften negativen Linse (132, 332) betragsmäßig kleiner ist als der betragsmäßige Wert des Krümmungsradius der bildseitigen Oberfläche (130, 330) dieser Linse;

f) wobei die vierte Bikonvex-Linse (128, 328) und die fünfte negative Linse (132, 332) miteinander verkittet sind und eine Dublette bilden,
g) wobei das Kamera-Objektiv (100, 300) keine weiteren Linsen aufweist und
h) wobei die objektseitige Oberfläche (120, 320) der dritten positiven Linse (124, 324) und die bildseitige Oberfläche (134, 334) der fünften negativen Linse (132, 332) als asphärische Oberflächen ausgebildet sind.

2. Kamera-Objektiv (100, 300) nach Anspruch 1,
**dadurch gekennzeichnet,**
**dass** das arithmetische Mittel aus den Brechungsindizes aller Linsen (110, 116, 122, 128, 132, 310, 316, 322, 328, 332) einen Wert größer 1,8 aufweist, wobei der Brechungsindex jeweils für eine Wellenlänge von 587,56 nm bestimmt wird.

3. Kamera-Objektiv (100, 300) nach einem der vorhergehenden Ansprüche,
**gekennzeichnet durch**
eine Blende (142) zwischen der zweiten negativen Linse (116, 316) und der dritten positiven Linse (128, 328).

4. Kamera-Objektiv (100, 300) nach dem vorhergehenden Anspruch,
**dadurch gekennzeichnet,**

a) **dass** die Blende (142) eine Irisblende mit einer Mehrzahl von Lamellen (510, 512) ist;
b) **dass** die Lamellen (510, 512) aus lichtundurchlässigem Material gebildet sind;
c) **dass** mindestens eine der Lamellen (512) eine Aussparung (516) im lichtundurchlässigen Material aufweist und als Schüeßlamelle fungiert,
d) **dass** die Aussparung (516) durch einen Neutraldichtefilter überdeckt ist;
e) **dass** die Führung (508) der Schließlamelle (512) derart ausgebildet ist, dass die Schließlamelle (512) diejenige Öffnung (806) vollständig überdecken kann, die beim Abblenden mittels der anderen Lamellen (510) verbleibt; und
f) **dass** die Form und Lage der Aussparung (516) derart gewählt ist, dass bei überdecken der beim Abblenden verbleibenden Blendenöffnung (806) durch die Schließlamelle (512) der Neutraldichtefilter in die verbleibende Blendenöffnung (806) eingeschwenkt wird.

5. Kamera-Objektiv (100, 300) nach dem vorhergehenden Anspruch,
**dadurch gekennzeichnet,**
**dass** die beiden äußersten Lamellen der Blende (142) als Schließlamellen (512) mit einer durch einen Neutraldichtefilter überdeckten Aussparung (516) ausgebildet sind.

**Claims**

1. A camera lens (100, 300) for imaging an object (100, 300), said camera lens comprising the following lenses in the stated sequence proceeding from the object side (101A):

   a) a first, positive, meniscus lens (110, 310),

      a1) wherein the concave surface (112, 312) of the first, positive, meniscus lens (110, 310) faces away from the object side 101A);

   b) a second, negative, lens (116, 316),

      b1) wherein the object-side surface (114, 314) of the second, negative, lens (116, 316) is concave; and
      b2) wherein the value of the radius of curvature of the object-side surface (114, 314) of the second, negative, lens (116, 316), is smaller in magnitude than the magnitude of the value of the radius of the curvature of the image-side surface (118, 318) of said lens;

   c) a third, positive, lens (122, 322),

      c1) wherein the image-side surface (120, 320) of the third, positive, lens (122, 322) is convex; and
      c2) wherein the value of the radius of curvature of the object-side surface (120, 320) of the third, positive, lens (122, 322) is greater in magnitude than the magnitude of the value of the radius of curvature of the image-side surface (124, 324) of said lens;

   d) a fourth, biconvex, lens (128, 328);
   e) a fifth, negative, lens (132, 332)

      e1) wherein the value of the radius of curvature of the object-side surface (130, 330) of the fifth, negative, lens (132, 332) is smaller in magnitude than the magnitude of the value of the radius of curvature of the image-side surface (130, 330) of said lens;

   f) wherein the fourth, biconvex, lens (128, 328) and the fifth, negative, lens (132, 332) are cemented with one another, thereby forming a doublet,
   g) wherein the camera lens (100, 300) comprises no further lenses and
   h) wherein the object-side surface (120, 320) of the third, positive, lens (124, 324) and the image-side surface (134, 334) of the fifth, negative, lens (132, 332) are designed as aspherical surfaces.

2. The camera lens (100, 300) according to Claim 1,
   **characterised in that**
   the arithmetic mean of the refractive indices of all lenses (110, 116, 122, 128, 132, 310, 316, 322, 328, 332) has a value greater than 1.8, wherein the refractive index is determined in each case for a wavelength of 587.56 nm.

3. The camera lens (100, 300) according to any one of the preceding claims,
   **characterised by**
   a diaphragm (142) between the second, negative, lens (116, 316) and the third, positive, lens (128, 328).

4. The camera lens (100, 300) according to the preceding claim,
   **characterised in that**

   a) the diaphragm (142) is an iris diaphragm with a multiplicity of blades (510, 512);
   b) the blades (510, 512) are formed from light-impermeable material;
   c) at least one of the blades (512) has a cutout (516) in the light-impermeable material and functions as a closing blade;
   d) the cutout (516) is covered by a neutral density filter;
   e) the guide (508) of the closing blade (512) is designed such that the closing blade (512) can completely cover the aperture (806) which remains when the other blades (510) are in a stopped-down state; and

f) the shape and position of the cutout (516) are selected such that, when the closing blade (512) is covering the diaphragm aperture (806) which remains in the stopped-down state, the neutral density filter is pivoted into the diaphragm aperture (806) which remains.

**5.** The camera lens (100, 300) according to the preceding claim,
**characterised in that**
the two outermost blades of the diaphragm (142) are formed as closing blades (512) with a cutout (516) which is covered by a neutral density filter.

**Revendications**

**1.** Objectif (100, 300) d'appareil photographique, qui est destiné à reproduire un objet (100, 300) et qui présente, dans l'ordre indiqué en partant du côté objet (101A), les lentilles suivantes :

a) une première lentille ménisque, positive (110,310),

a1) sachant que la surface concave (112,312) de la première lentille ménisque, positive (110, 310), est opposée au côté objet (101A) ;

b) une deuxième lentille, négative (116, 316),

b1) sachant que la surface côté objet (114, 314) de la deuxième lentille, négative (116, 316), est concave ; et
b2) sachant que la valeur du rayon de courbure de la surface côté objet (114, 314) de la deuxième lentille, négative (116, 316), est d'un montant inférieur à la valeur du rayon de courbure de la surface côté image (118, 318) de cette lentille ;

c) une troisième lentille, positive (122, 322),

c1) sachant que la surface côté image (120, 320) de la troisième lentille, positive (122, 322), est convexe ; et
c2) sachant que la valeur du rayon de courbure de la surface côté objet (120, 320) de la troisième lentille, positive (122, 322), est d'un montant inférieur à la valeur du rayon de courbure de la surface côté image (124, 324) de cette lentille ;

d) une quatrième lentille, biconvexe (128, 328);
e) une cinquième lentille, négative (132, 332),

e1) sachant que la valeur du rayon de courbure de la surface côté objet (130, 330) de la cinquième lentille, négative (132,332), est d'un montant inférieur à la valeur du rayon de courbure de la surface côté image (130, 330) de cette lentille ;

f) sachant que la quatrième lentille, biconvexe (128, 328), et la cinquième lentille, négative (132,332), sont assemblées entre elles par masticage et forment une doublette,
g) sachant que l'objectif (100, 300) d'appareil photographique ne présente aucune autre lentille et
h) sachant que la surface côté objet (120, 320) de la troisième lentille, positive (124, 324), et la surface côté image (134,334) de la cinquième lentille, négative (132, 332), sont réalisées sous la forme de surfaces asphériques.

**2.** Objectif (100, 300) d'appareil photographique selon la revendication 1,
**caractérisé**
**en ce que** la moyenne arithmétique des indices de réfraction de toutes les lentilles (110,116, 122, 128, 132, 310, 316, 322, 328, 332) présente une valeur supérieure à 1,8, sachant que l'indice de réfraction est chaque fois déterminé pour une longueur d'onde de 587,56 nm.

**3.** Objectif (100, 300) d'appareil photographique selon l'une des revendications précédentes,
**caractérisé par**
un diaphragme (142) entre la deuxième lentille, négative (116, 316), et la troisième lentille, positive (128, 328).

**4.** Objectif (100, 300) d'appareil photographique selon la revendication précédente, **caractérisé,**

> a) **en ce que** le diaphragme (142) est un diaphragme à iris avec une pluralité de lamelles (510, 512) ;
> b) **en ce que** les lamelles (510, 512) sont formées d'un matériau opaque ;
> c) **en ce qu'**au moins une des lamelles (512) présente un évidement (516) dans le matériau opaque et joue le rôle de lamelle d'obturation ;
> d) **en ce que** l'évidement (516) est recouvert par un filtre de densité neutre ;
> e) **en ce que** le guide (508) de la lamelle d'obturation (512) est conçu de telle sorte que la lamelle d'obturation(512) peut totalement recouvrir l'ouverture (806) qui reste présente lorsqu'on règle le diaphragme au moyen des autres lamelles (510) ; et
> f) **en ce que** la forme et la position de l'évidement (516) sont choisies de telle sorte que, lors du recouvrement par la lamelle d'obturation (512) de l'ouverture de diaphragme (806) restant présente lorsqu'on règle le diaphragme, le filtre de densité neutre est rentré par pivotement dans l'ouverture de diaphragme restant présente (806).

**5.** Objectif (100, 300) d'appareil photographique selon la revendication précédente, **caractérisé,**
**en ce que** les deux lamelles les plus extérieures du diaphragme (142) sont conçues comme lamelles d'obturation (512) dotées d'un évidement (516) recouvert par un filtre de densité neutre.

Fig. 1

Fig. 2

EP 2 535 751 B1

**Fig. 3**

EP 2 535 751 B1

EP 2 535 751 B1

400

relative Beleuchtungsstärke

1,0

0,8

0,6

0,4

0,2

0

402

0 0,609 1,218 1,827 2,436 3,045 3,654 4,263 4,872 5,481 6,09

Millimeter

**Fig. 4**

**Fig.5**

EP 2 535 751 B1

EP 2 535 751 B1

520

518

518

510

512

516

**Fig. 6A**

**Fig. 6B**

EP 2 535 751 B1

**Fig.7A**

**Fig.7B**

Fig.8

EP 2 535 751 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7826151 B2
- US 7710665 B2
- US 7054076 B2
- US 7050245 B2
- US 6023375 A
- US 5636067 A
- EP 1975665 A2